# EUROPEAN PATENT APPLICATION

(11) **EP 2 063 106 A1**
(43) Date of publication of application: **27.05.2009**
(21) Application number: 07823054.7
(22) Date of filing: 14.09.2007
(51) Int. Cl.: F03D 7/00, F03D 1/00, F03D 11/00

(54) **OPTIMISED WIND TURBINE BLADE**

(30) Priority: 15.09.2006 ES 200602347
(71) Applicant: Gamesa Innovation & Technology, S.L., 48170 Zamudio (Bizkaia) (ES)
(72) Inventor: SLOT, Mark Olaf, DK-8600 Silkeborg (DK); MATESANZ GIL, Alvaro, E-31013 Pamplona (ES); FRIEDERICH, Michael, DK-8600 Silkeborg (DK); REBSDORF, Anders, DK-8600 Silkeborg (DK)
(86) International application number: PCT/ES2007/070160
(87) International publication number: WO 2008/031913

(57) **Abstract**

An optimised wind turbine blade comprising a first component (7) having an aerodynamic profile with a leading edge (11), a blunt trailing edge (13) having a thickness T greater than 2 mm, and suction and pressure sides (17, 19) between the leading edge (11) and the blunt trailing edge (13) and a second component for reducing the blunt trailing edge noise, that can be embodied as a strip of a sharp profile (9) or as a splitter plate (12) having a constant cross section in the spanwise direction of the blade, which is rigidly attached to the blunt trailing edge (13) of the first component (7) in at least a part of the wind turbine blade by attachment means that allow its replacement. The splitter plate (12) can include additional means for protecting the blade against lightning or other electrical discharges connected to the main lightning protection means placed in the first component (7).

## Description

### FIELD OF THE INVENTION

The invention relates to an aerodynamically optimised wind turbine blade and in particular to a wind turbine blade design that reduces the blunt trailing edge noise. The invention also relates to a complementary lightening protection means for the wind turbine blade

### BACKGROUND

The noise from a wind turbine originates from mechanical and aerodynamic sources.

The aerodynamic noise can be split up into different mechanisms that produce the noise:
- Thickness noise. Originating from a blade that displaces air by moving through the air. Frequency is discrete and related to blade passing frequency (typical around 1 Hz + harmonics up to around 30 Hz).
- Unsteady loading noise. Originating from the pressure fluctuations due to unsteady aerodynamic loading of the blade (from wind shear, rotor misalignment, tower shadow etc.). Frequency is discrete and related to blade passing frequency (typical around 1 Hz + harmonics up to around 30 Hz).
- Inflow turbulence noise, also known as leading edge noise. Originating from the leading edge and caused by the atmospheric turbulence, which induces pressure fluctuations when hitting the leading edge. Frequency is broadband and related to the frequency spectrum of the atmospheric turbulence and the tip speed ratio (typical from 0 Hz to around 5000 Hz, most noticeable at low to medium frequencies).
- Turbulent boundary layer trailing edge noise. Originating from the fluctuating pressure deficit between the suction side and pressure side when the flows meet at the trailing edge. Frequency is broadband and related to boundary layer parameters (typical from 100 Hz to 10000 Hz, most noticeable at medium frequencies around 1000 Hz).
- Tip noise. Originating from the turbulence in the tip vortex. Frequency is broadband and related to the diameter of the tip vortex (typical around 1000 Hz to 8000 Hz).
- Stall noise. Originates from the pressure fluctuations in areas with flow separation, often present at high angles of attack. Frequency is broadband and related to the extension of the stall area (typical from 20 Hz to 1000 Hz).
- Laminar boundary layer vortex shedding noise. Originates from instabilities in the pressure side boundary layer causing vortex shedding. Frequency is tonal and related to the pressure side boundary layer thickness (typical between 1000 Hz and 4000 Hz).
- Blunt trailing edge noise. Originates from the small flow separation zone behind a blunt trailing edge, which causes vortex shedding (well known as von Karman vortex shedding). Frequency is tonal and related to the trailing edge thickness (typical between 1000 Hz and 4000 Hz).
- Noise from flow over holes, slits, intrusions. Originating from instable shear flows and vortex shedding. Frequency is tonal and related to the dimension of the flow disturbing element (typical between 1000 and 10000 Hz).

The prior art teaches the use of a serrated trailing edge to reduce the different types of trailing edge noise.

EP 1 314 885 discloses a trailing edge device consisting of a serrated panel to be attached to the trailing edge of the blade.

EP 1 338 793 discloses a one-piece blade made of metal with dentations being formed in the trailing edge part and a two-pieces blade consisting of a main blade body made of metal and a rear member made of a different metal with dentations being formed in the trailing edge part.

None of these proposals produces fully satisfactory results, therefore a continuing need exists for wind turbine blades with a reduced blunt trailing edge noise level.

### SUMMARY OF THE INVENTION

An object of the present invention is to provide a wind turbine blade that reduces the blunt trailing edge noise.

Another object of the present invention is to provide a wind turbine blade easy to manufacture, handle and transport.

Another object of the present invention is to provide a wind turbine blade having a trailing edge easy to repair when it is damaged.

Another object of the present invention is to provide an improved lightning protection system for the wind turbine blade.

These and other objects of the present invention are met by providing a wind turbine blade comprising a first component having an aerodynamic profile with a leading edge, a blunt trailing edge having a thickness greater than 2 mm, and suction and pressure sides between the leading edge and the trailing edge and a second component having a constant cross section in the spanwise direction of the blade which is rigidly attached to the blunt trailing edge of the first component in at least a part of the wind turbine blade by attachment means that allow its replacement.

In a preferred embodiment the second component includes a conductive layer connected to the wind turbine blade lightning system. Hereby a improved lightning protection system for the wind turbine blade is achieved.

Other features and advantages of the present invention will be understood from the following detailed description in relation with the enclosed drawings.

### BRIEF DESCRIPTION OF DRAWINGS

Figure 1 shows the principal mechanism of blunt trailing edge noise.
Figure 2 is a schematic view of the profile of the wind turbine blade first component according to the present invention.
Figure 3 and 4 are schematic views of the profile of a wind turbine blade according to the present invention with two embodiments of the second component attached to the first component.
Figure 5 is a schematic view of the trailing edge of a wind turbine blade according to the present invention showing an embodiment of the splitter plate with perpendicular walls.
Figure 6 is a schematic plan view of a wind turbine blade according to the present invention.
Figure 7 is a magnified view of the outer part of the wind turbine blade shown in Figure 6 that includes means for protecting the blade against lightning.
Figures 8a to 8d are schematic sectional views of different embodiments of a splitter plate according to the present invention incorporating means for protecting the blade against lightning.

### DETAILED DESCRIPTION OF PREFERRED EMBODIMENTS

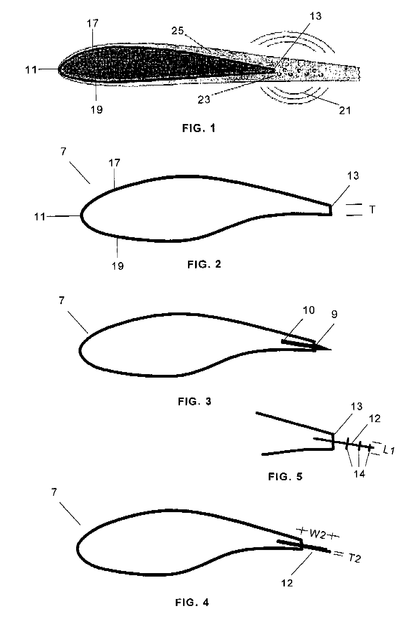

Figure 1 shows the tonal noise 21 radiated from an aerodynamic profile with a leading edge 11, a blunt trailing edge 13 and suction 17 and pressure 19 sides.

Depending on the bluntness and the shape of the trailing edge 13 and the Reynolds number, vortex shedding 23 can occur resulting in a von Karman type vortex street. The alternating vortices in the near wake produce higher surface pressure fluctuations close to the trailing edge 13. If the bluntness parameter T/δ, where T is the trailing edge 13 thickness and δ the boundary layer 25 displacement thickness, is large enough, fluctuation forces will occur resulting in dipole noise of tonal character.

The wind turbine blade first component 7 according to the present invention, shown in Figure 2, has an aerodynamic profile with a leading edge 11, a blunt trailing edge 13 of thickness T and suction 17 and pressure 19 sides.

In the embodiment shown in Figure 3, the wind turbine blade second component 9 according to the present invention is a strip attached to the blunt trailing edge 13 of the first component 7 in at least a part of the blade.

The noise produced by the blunt trailing edge noise mechanism (a completely different physical mechanism than the turbulent boundary layer trailing edge noise) is proportional to the trailing edge thickness T.

The noise produced by the turbulent boundary layer mechanism is proportional to cosq³, where q is the flow angle between the flow direction over the trailing edge and a line perpendicular to the trailing edge. For a normal wind turbine blade without significant spanwise flow this angle is usually small (around 0° to 10°), and the cosine term is approximately 1. In the case of a serrated trailing edge, such as those of the prior art proposal above-mentioned, this angle is much higher (depending on the angle of the serrations), maybe around 70° to 85°, and the cosine term is close to 0. This will dramatically reduce the noise in theory but in practice the results are not always as good as expected.

The trailing edge strip 9 has a sharp profile with upper and lower surfaces shaped as extensions of the suction and pressure sides of said first component 7 ending in a sharp edge.

By using a trailing edge strip 9, which is more or less sharp, the resulting trailing edge thickness is close to 0, and thereby the blunt trailing edge noise mechanism is eliminated.

The trailing edge strip 9 has a constant cross section in spanwise direction while the serrated trailing edge of the above-mentioned prior art proposals has a non-constant cross section in spanwise direction.

The upper and lower surfaces of the trailing edge strip 9 could have a flat geometry or a slightly curved geometry.

The attachment of the trailing edge strip 9 to the first component 7 can be made in any suitable manner.

In a preferred embodiment the trailing edge strip 9 includes a plate 10 which extends in between the shells of the first component 7 and it is glued together.

In another preferred embodiment the trailing edge strip 9 is attached to the first component 7 by means of a 'click-on device' (not shown).

In the embodiment shown in Figure 4, the wind turbine blade second component 12 according to the present invention is a small splitter plate mounted on the blunt trailing edge 13 between the upper and lower shells of the blade having a constant cross section in spanwise direction and a thickness T2 lesser that the thickness T of the blunt trailing edge 13.

In a preferred embodiment the thickness T2 of the splitter plate 12 is lesser than 1 mm.

In another preferred embodiment the width W2 of the splitter plate 12 extending from the blunt trailing edge 13 is greater than two times the thickness T of the blunt trailing edge 13.

The splitter plate 12 prevents the otherwise periodical alternating vortex shedding from the upper and lower corners of the blunt trailing edge 13, which produce tonal noise. The splitter plate 12 dramatically reduces the periodical vortex shedding and could almost eliminate the tonal part of the trailing edge bluntness noise. There will still be some periodical vortex shedding from the end of the splitter plate 12, but if the thickness T2 of this splitter plate is small, the amplitude of the tonal noise will also be small (possibly drowned by other noise sources) and the frequency will be high (possibly outside the audible frequency range of the human hearing). If the blunt trailing edge 13 gets damaged, it would be easy to repair it just by replacing a piece of the splitter plate 12.

The splitter plate 12 is fastened between the shells by gluing, a click-on device or by other means. The precise placement of the splitter plate 12 is not critical because it is effective in different angles with respect to the blunt trailing edge 13 and in different extension lengths from the blunt trailing edge

In a preferred embodiment, the splitter plate 12 includes one or several perpendicular walls 14 having a length L1 lesser than the thickness T of the blunt trailing edge 13.

The thickness T of the blunt trailing edge 13 is greater than 2 mm, which is the minimum thickness of standard wind turbine blades in serial production using standard manufacturing procedures.

In another preferred embodiment the thickness T of the blunt trailing edge 13 is greater than 5 mm.

In another preferred embodiment the thickness T of the blunt trailing edge 13 is greater than 10 mm.

Blades with thicker trailing edges than current standard blades made with trailing edge thickness T in the range of 2-3 mm could be easier in production and finish and more robust for transportation.

In a preferred embodiment the trailing edge strip 9 or the splitter plate 12 could cover the outermost part of the blade, in a length from 2% to 35% of the blade radius. At the midspan and the inboard part of the blade, it is normally not so interesting to have the second component, because the noise produced from these parts of the blade is minor compared to the outer part. Furthermore, there are other factors making it desirable to have a thicker blunt trailing edge at the inboard part of the blade.

The trailing edge strip 9 or the splitter plate 12 can be made in plastic or any other material that is cheap and easy to shape in the desired geometry in predetermined lengths L of e.g. 1 m for facilitating the attachment to the first component 7.

In preferred embodiments a porous material (or a solid material having holes) or a flexible material are used to decrease the surface acoustic impedance and consequently reducing the noise caused by other noise sources.

The trailing edge strip 9 or the splitter plate 12 according to the present invention can be attached to blades preferably made in GFRP although can also be attached to blades made of other materials such as wood, metal, CFRP or other fiber materials.

In addition to its function as a device for reducing the blunt trailing edge noise, the splitter plate 12 may also be used as a complementary means for protecting the blade against lightning or other electrical discharges.

As shown in Figure 5 the lightning protecting system for a wind turbine generally involves lightning receptors 43 at the surface of the blade for capturing the lightning strokes and a lightning down conductor 41 inside the blade that, in connection with other conductors in the nacelle and the tower, allows that the lightning is discharged to a ground potential.

To accomplish said complementary lightning protection the splitter plate 12 comprises a base plate 31 made in a non-conductive material and a layer 33 of a conductive material connected to the lightning protecting system covering at least a section of one of the surfaces of the base plate 31.

In a preferred embodiment, the fixture of the layer 33 to the base plate 31 will be done in a similar manner to the conductive layer on an electronic printed circuit board (PCB).

Taking into account that the edgewise loads typically makes the trailing edge 13 to one of the highest stress areas of the blade where the extreme strains can reach up to 10.000 µstrain, the layer 33 can not be a "straight" but a "flexible" conductor element able to withstand said strains.

Consequently, the layer 33 is not expected to have a good conductibility for a normal constant current, but for a sphere of ionized air with high electric potential. The layer 33 shall be seen as an "attractive conductor" capable to guide the energy towards the more heavy lightning down conductor 41 designed to transmit the high frequency current with high current altitude and hence potential heat generation towards a stable ground potential.

Hence the layer 33 must with interval be connected to the lightning down connector 41 and this connection must be made in a way which enable good guidance of this extreme energy transmission with no or limited "flash over" with possible damage outside the lightning protection system. The physical interval between said connections could be in the range from 0,5m to 5m.

Said connections may be made by means of flexible conductors 45 inside the blade and/or conducting tapes 47 mounted at the blade surface between the layer 33 and the lightning receptors 43.

The typical lightning impact area on a wind turbine blade is in the outer part 5 of the blade. Due to this, the splitter plate 12 preferably comprises conductive layers 33 in the outer part 5 of the blade along a length in the range of 2% to 35% the blade radius.

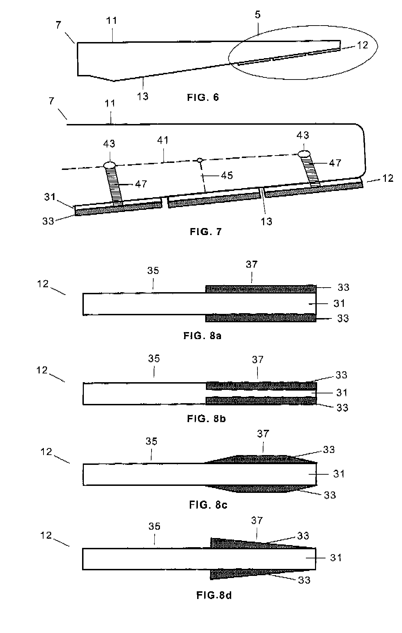

In preferred embodiments, shown in Figures 8a to 8c, the splitter plate 12 comprises a base plate 31 made in a non-conductive material and one or more layers 33 of a conductive material covering different sections of the base plate 31.

In the embodiment shown in Figure 8a, two layers 33 of a conductive material cover the upper and lower surfaces of a section 37 of the base plate 31.

In the embodiment shown in Figure 8b, two layers 33 of a conductive material cover the upper and lower surfaces of a section 37 of the base plate 31 of lesser width than the section 35 not covered by any layer of a conductive material, being the width of section 37 plus the width of the two layers 33 approximately the same than the width of section 35.

In the embodiments shown in Figures 8c and 8d, the layers 33 of conductive material have not a uniform width as in the previous embodiments but a variable width along the base plate 31.

The embodiments shown in Figures 8b to 8d are examples of splitter plates 12 incorporating means for protecting the blade against lightning or other electrical discharges, in which the shape of said means is chosen to provide the splitter plate 12 with some particular aerodynamic property.

The main advantage of having complementary means for protecting the blade against lightning or other electrical discharges in the splitter plate 12 is that the damages caused by lightening in the own blade are reduced. On the other hand, the damages caused in the splitter plate 12 are easy to repair.

Although the present invention has been fully described in connection with preferred embodiments, it is evident that modifications may be introduced within the scope thereof, not considering this as limited by these embodiments, but by the contents of the following claims.

## Claims

1. A wind turbine blade comprising a first component (7) having an aerodynamic profile with a leading edge (11), a blunt trailing edge (13) having a thickness T greater than 2 mm, and suction and pressure sides (17, 19) between the leading edge (11) and the blunt trailing edge (13) and a second component (9, 12) attached to the blunt trailing edge (13) of the first component (7) in at least a part of the wind turbine blade for reducing the blunt trailing edge noise, **characterized in that:**
a) said second component (9, 12) has a constant cross section in the spanwise direction of the blade;
b) said second component (9, 12) is rigidly attached to said first component (7) by attachment means that allow its replacement.

2. A wind turbine blade according to claim 1, **characterized in that** the second component (9) has a sharp profile with upper and lower surfaces shaped as extensions of the suction and pressure sides (17, 19) of said first component (7) ending in a sharp edge.

3. A wind turbine blade according to claim 1, **characterized in that** the second component (12) is a splitter plate mounted between the upper and lower parts of the blade having a thickness T2 lesser than the thickness T of the blunt trailing edge (13).

4. A wind turbine blade according to claim 3, **characterized in that** the thickness T2 of the second component (12) is lesser than 1 mm.

5. A wind turbine blade according to any of claims 3-4, **characterized in that** the width W2 of the second component (12) extending from the blunt trailing edge (13) is greater than two times the thickness T of the blunt trailing edge (13).

6. A wind turbine blade according to any of claims 3-5, **characterized in that** the second component (12) includes at least a perpendicular wall (14) to the splitting plate (12) having a length L1 lesser than the thickness T of the blunt trailing edge (13).

7. A wind turbine blade according to any of claims 1-6 **characterized in that** said second component (9, 12) is attached to said first component (7) in the outer part of the blade in a length in the range of 1% to 35% the blade radius.

8. A wind turbine blade according to any of claims 1-7, **characterized in that** said second component (9, 12) is provided in units of a predetermined length L.

9. A wind turbine blade according to claim 1-8, **characterized in that** the thickness T of the blunt trailing edge (13) is greater than 5 mm.

10. A wind turbine blade according to claim 1-8, **characterized in that** the thickness T of the blunt trailing edge (13) is greater than 10 mm.

11. A wind turbine blade according to any one of claims 1-10, **characterized in that** said second component (9, 12) is made in a flexible material.

12. A wind turbine blade according to any one of claims 1-10, **characterized in that** said second component (9, 12) is made in a porous material.

13. A wind turbine blade according to any of claims 7-9 having lightning protection means in the first component (7) including lightning receptors (43) in its surface and a lightning down conductor (41), **characterized in that** said splitter plate (12) includes additional means for protecting the blade against lightning or other electrical discharges connected to said lightning protection means in the first component (7).

14. A wind turbine blade according to claim 13, **characterized in that** said splitter plate (12) comprises a base plate (31) made in a non-conductive material and a layer (33) of a conductive material covering at least a section of one of the surfaces of the base plate (31).

15. A wind turbine blade according to claim 14, **characterized in that** the base plate (31) is covered by said layer (33) in the outer part (5) of the blade in a length in the range of 2% to 35% the blade radius

16. A wind turbine blade according to claim 15, **characterized in that** said layer (33) is connected to said lightning receptors (43) and/or to said lightning down conductor (41) at intervals from 0,5 to 5m.

17. A wind turbine blade according to claim 16, **characterized in that** the connections between said layer (33) and said lightning receptors (43) are made by means of a conducting tape (47) and the connections between the said layer (33) and said lightning down conductor (41) are made by means of flexible conductors (45).

18. A wind turbine blade according to any of claims 14-17, **characterized in that** said layer (33) covers a section (37) of the upper surface of the base plate (31).

19. A wind turbine blade according to any of claims 14-18, **characterized in that** said layer (33) cover a section (37) of the upper and lower surfaces of the base plate (31).

20. A wind turbine blade according to any of claims 18-19, **characterized in that** the base plate (31) has a uniform thickness.

21. A wind turbine blade according to claim 20, **characterized in that** said layer (33) has a uniform thickness.

22. A wind turbine blade according to claim 20, **characterized in that** said layer (33) has a variable thickness.

23. A wind turbine blade according to any of claims 18-19, **characterized in that** the splitter plate (12) has a uniform thickness.
